# EUROPEAN PATENT APPLICATION

(11) **EP 3 021 637 A1**
(43) Date of publication of application: **18.05.2016**
(21) Application number: 14783478.2
(22) Date of filing: 25.04.2014
(51) Int. Cl.: H04W 76/06

(54) **CONFERENCE RELEASE METHOD, DEVICE AND SYSTEM, AND STORAGE MEDIUM**

(30) Priority: 09.07.2013 CN 201310286732
(71) Applicant: ZTE Corporation, Shenzhen, Guangdong 518057 (CN)
(72) Inventor: LIU, Jingxiang, Shenzhen Guangdong 518057 (CN); YU, Lei, Shenzhen Guangdong 518057 (CN); ZOU, Changle, Shenzhen Guangdong 518057 (CN)
(74) Representative: Tischner, Oliver
(86) International application number: PCT/CN2014/076212
(87) International publication number: WO 2014/166442

(57) **Abstract**

Described is a releasing method for a conference, and the method includes: when it is determined that a participant leaves the conference, media resources of the conference which are related to the participant are released, and a sponsor of the conference is notified to release a transaction identifier used by the participant during the conference A releasing device and system for a conference, and a computer storage medium are further provided.

## Description

### Technical Field

The present disclosure relates to IP Multimedia Subsystem (IMS) technology, and in particular to a releasing method, device and system for a conference, and a storage medium.

### Background

IMS is a network serving multimedia services, and its related protocols and specifications are all established by the 3rd Generation Partnership Project (3GPP). An IMS network is established based on Internet Protocols (IPs), and takes the Session Initiation Protocol (SIP) as control signalling. Due to features such as separation of bearer from control, access irrelevance and the like, the IMS network may provide unified multimedia services to a user accessing other different networks such as Circuit-Switched (CS) networks, Packet-Switched (PS) networks and the like.

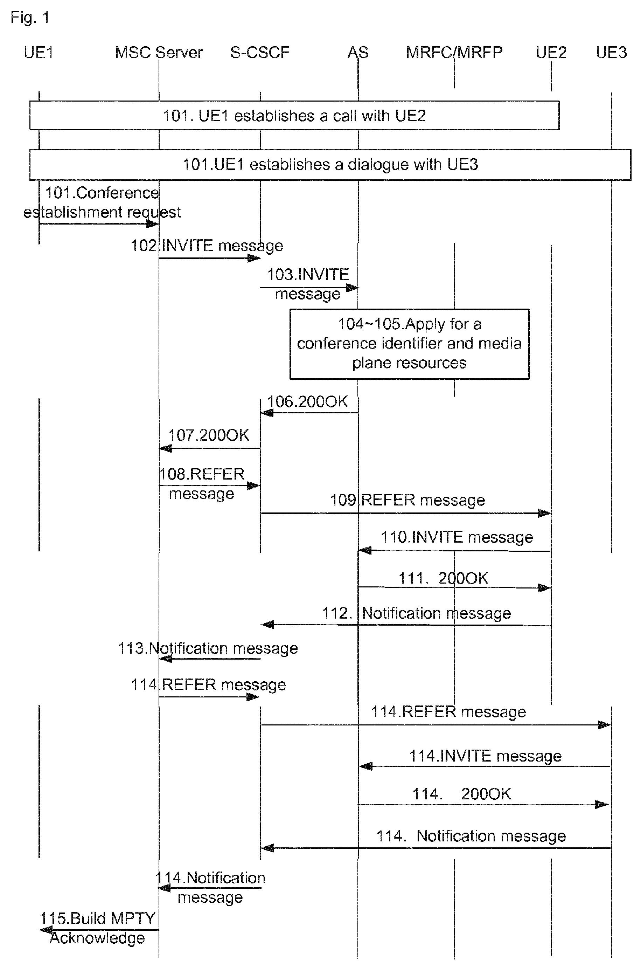

The access irrelevance of IMS enables the IMS network to provide a CS network with IMS centralized services, such as voice conferencing services. In related arts, User Equipment (UE) accesses an IMS network via a CS network to make a multi-party conference, for example, a process for building a three-party conference is as shown in Fig. 1, in which:
Step 101, a sponsor UE1 establishes a call with remote participants UE2 and UE3 respectively through a Mobile Switching Center (MSC) server;
UE1 then requests to build a three-party conference with UE2 and UE3, and transmits a Build MPTY Request to the MSC server.

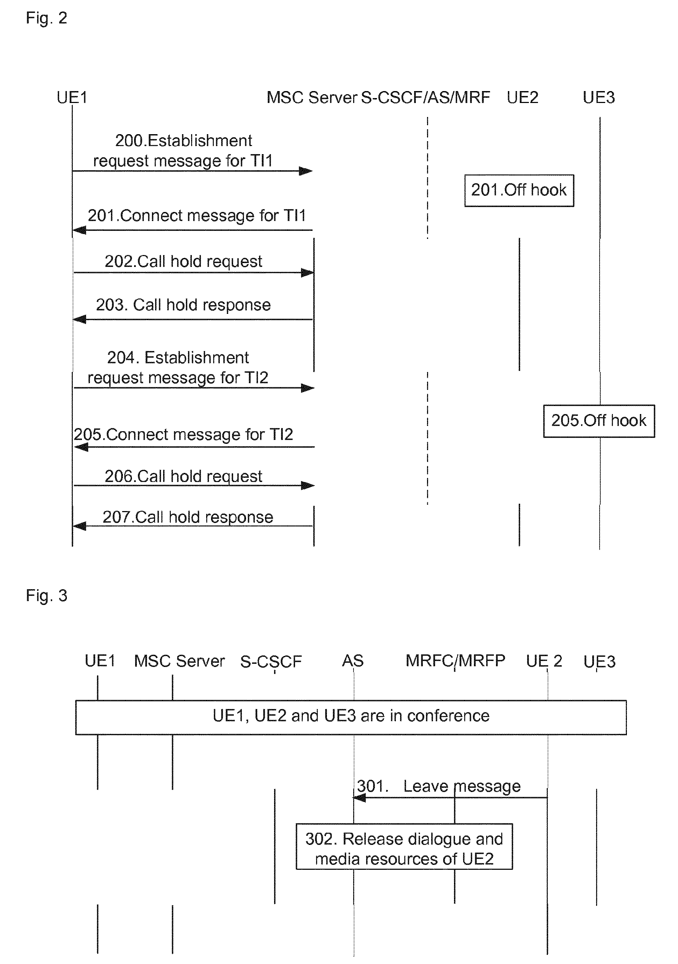

Specifically, a process for the sponsor UE1 to establish a call with the participant (called party) UE2 is as shown in Fig. 2, in which:
Step 200, when the sponsor UE1 is intended to establish a first call with UE2, the sponsor UE1 transmits, to an MSC server, an establishment request (SETUP) message containing a Transaction Identifier (TI) for a dialogue between UE1 and UE2, wherein the TI specifically is TI1.
Step 201, the called party UE2 goes off-hook, the MSC server returns a Connect message of TI1 to UE1.
Step202, UE1 holds the first call, and transmits a call Hold Request containing TI1 to the MSC server.
Step 203, the MSC server holds the call between UE1 and UE2, and returns a Hold Acknowledged message of TI1 to UE1.
Step 204, when the sponsor UE1 is intended to establish a second call with UE3, the sponsor UE1 transmits, to the MSC server, an SETUP message containing a TI of a conference between UE1 and UE2, wherein the TI specifically is TI2.
Step 205, the called party UE3 goes off-hook, the MSC server returns a Connect message of TI2 to UE1.
Step206, UE1 holds the first call, and transmits a Hold Request containing TI1 to the MSC server.
Step 207, the MSC server holds the call between UE1 and UE3, and returns a Hold Acknowledged message of TI2 to UE1, and until then UE1 establishes a call with UE2 and UE3 respectively.

It is to be noted that since UE1, UE2 and UE3 accesses the IMS network via CS, the processing process shown in Fig. 2 may involve functional entities of the IMS network, such as a Serving Call Session Control Function (S-CSCF), an Application Server (AS), a Media Resource Function Controller (MRFC), a Media Resource Function Processor (MRFP) and the like; these entities may be configured not to participate the above processing, instead, to only take charge of forwarding related data.

Here, in step 101, UE1 may transmit a Build MPTY Request containing TI1 to the MSC server, and may also transmit a Build MPTY Request containing TI2 to the MSC server.

Step 102, upon receiving the Build MPTY Request, the MSC server transmits an INVITE message containing a Conference Factory URL to an S-CSCF.

Here, the Conference Factory URL serves as a destination address of the INVITE message.

Step 103, the S-CSCF parses out the INVITE message containing the destination address using SIP, and forwards the INVITE message to an AS.

Step 104, upon receiving the INVITE message, the AS applies for a Conference URL corresponding to the Conference Factory URL, which serves as an identifier of the three-party conference.

Step 105, the AS applies to an MRFC/MRFP for media plane resources of the conference.

Here, the media plane resources include: playing media and voice service links related to the multi-party conference, and the like; in practice, the MRFC and the MRFP are typically combined to be an MRF entity, that is why in this step the two are described together.
Step 106, the AS returns an acknowledgement response (200OK) containing the Conference URL to the S-CSCF.
Step 107, the S-CSCF forwards 200OK to the MSC server.
Step 108, upon receiving 200OK, the MSC server transmits a REFER message containing the Conference URL to the S-CSCF so as to achieve the goal of inviting UE2 to join in a dialogue having the Conference URL.
Step 109, the S-CSCF forwards the REFER message to UE2.
Step 110, upon receiving the Conference URL serving as an identification address of the conference, UE2 transmits the INVITE message to the AS to request to join in the AS.
Step 111, the AS connects UE2 to the conference media and returns 200OK to UE2.
Step 112, UE2 transmits a NOTIFY message to the S-CSCF to notify the MSC server that UE2 has joined in the conference.
Step 113, the S-CSCF forwards the NOTIFY message to the MSC server.
Step 114, the MSC server continues to take UE3 to the conference, the processing process of which is as shown in steps 108-113 with UE2 in these steps being replaced by UE3, and the detailed description thereof will be omitted herein for simplicity.
Step 115, the MSC server transmits a Build MPTY Acknowledge to UE1 to notify UE1 that the three-party conference has been established successfully.

Fig. 3 is a flow chart showing a process for a participant UE2 to leave a conference, which includes steps as follows.
Step 301, UE2 transmits a leave (BYE) message to an AS.
Step 302, upon receiving the BYE message, the AS releases a dialogue (data) and media resources between a sponsor UE1 and the participant UE2; here, the media resources include playing media and dialogue links,

It can be seen from the above description that for a case in related art where the participant UE2 leaves a conference, the participant UE2 per se merely leaves the conference but the sponsor UE1 does not receive a notification that UE2 leaves; furthermore, the AS only releases dialogue data and dialogue resources between the sponsor UE1 and the participant UE2, but does not release the TI1 of conference resources between the sponsor UE1 and the participant UE2; given limited TIi (the value of i is typically 0 to 7) resources, there is an urgent need for a method for releasing the TI of a participant when the participant leaves a conference.

### Summary

Embodiments of the present disclosure provide a releasing method, device and system for a conference and a storage medium that can enable a sponsor to learn in time a participant's leave and to release a corresponding TI, thereby improving resource utilization.

The technical solutions of the present disclosure are implemented as follows.

An embodiment of the present disclosure provides a releasing method for a conference, including:
when it is determined that a participant leaves the conference, media resources of the conference which are related to the participant are released, and a sponsor of the conference is notified to release a transaction identifier used by the participant during the conference.

In the above solution, the method may further include: before the sponsor of the conference is notified to release the transaction identifier used by the participant during the conference, the transaction identifier used by the participant during the conference on a network side is released.

In the above solution, the method may further include:
after the sponsor of the conference releases the transaction identifier used by the participant during the conference, the transaction identifier used by the participant during the conference on a network side is released.

In the above solution, the step that it is determined that a participant leaves the conference may include:
after an Application Server (AS) on the network side receives a leave message transmitted by the participant, the AS determines that the participant leaves the conference.

In the above solution, the method further include: after the AS determines that the participant leaves the conference,
the AS transmits a notification message for releasing the transaction identifier to a Mobile Switching Center (MSC), or the AS transmits a notification message for releasing the transaction identifier to an MSC through a Serving Call Session Control Function (S-CSCF) on the network side;
after the MSC receives the notification message, the MSC releases the transaction identifier used by the participant during the conference, transmits a release request message to the sponsor of the conference, and receives an acknowledgement response message from the sponsor; or
after the MSC receives the notification message, the MSC transmits a release request message to the sponsor of the conference, and after receiving an acknowledgement response message from the sponsor, the MSC releases the transaction identifier used by the participant during the conference.

In the above solution, the method may further include:
after the sponsor receives the release request message, the sponsor releases the transaction identifier used by the sponsor and the participant during the conference, and returns the acknowledgement response message to the MSC.

An embodiment of the present disclosure further provides a releasing device for a conference, including a determination module, a release module and a notification module, in which:
the determination module is configured to determine that a participant leaves the conference;
the release module is configured to release media resources of the conference which are related to the participant; and
the notification module is configured to notify a sponsor of the conference to release a transaction identifier used by the participant during the conference.

In the above solution, the device may further include a transmission module configured to receive a leave message transmitted by the participant and trigger the determination module;
accordingly, the determination module is configured to determine that the participant leaves the conference.

In the above solution, the device may further include a first transmission and release module and a second transmission and release module, in which:
the transmission module is further configured to transmit a notification message;
accordingly, the first transmission and release module is configured to receive the notification message, release the transaction identifier used by the participant during the conference on a network side, and trigger the notification module;
the notification module is configured to transmit a release request message; and
the second transmission and release module is configured to receive the release request message, release the transaction identifier used by the sponsor and the participant during the conference, and return an acknowledgement response message to the first transmission and release module.

An embodiment of the present disclosure further provides a releasing system for a conference, comprising an Application Server (AS) and a Mobile Switching Center (MSC), in which:
the AS is configured to, after determining that a participant leaves the conference, release media resources of the conference which are related to the participant, and transmit a notification message for releasing a transaction identifier to the MSC;
the MSC is configured to, after receiving the notification message, release the transaction identifier used by the participant during the conference, transmit a release request message to a sponsor of the conference, and receive an acknowledgement response message from the sponsor; or
the MSC is configured to, after receiving the notification message, transmit a release request message to a sponsor of the conference, and after receiving an acknowledgement response message from the sponsor, release the transaction identifier used by the participant during the conference.

An embodiment of the present disclosure further provides a computer storage medium, in which a computer-executable instruction is stored, wherein the computer-executable instruction is configured to implement the aforementioned releasing method for a conference.

The releasing method, device and system for a conference and a storage medium are provided by the embodiments of the present disclosure, and the method includes: when it is determined that a participant leaves the conference, media resources of the conference which are related to the participant are released, and a sponsor of the conference is notified to release a transaction identifier used by the participant during the conference. By means of the technical solutions of the embodiments of the present disclosure, a sponsor of a conference can learn in time from a release request message that a participant leaves the conference, and the sponsor and an MSC server release, through a three-way handshake, the transaction identifier used by the sponsor and the participant during the conference, so as to provide transaction identifier resources to other subsequent participants accessing the conference, thereby improving resource utilization.

### BRIEF DESCRIPTION OF THE DRAWINGS

Fig. 1 is a flow chart showing implementation of a multi-party conference by a user terminal accessing an IMS network through a CS network;
Fig. 2 is a flow chart showing establishment of a call by a sponsor with multiple participants;
Fig. 3 is a flow chart showing a process for a participant to leave a conference;
Fig. 4 is a flow chart of a releasing method for a conference according to an embodiment of the present disclosure;
Fig. 5 is a flow chart of a specific embodiment of a releasing method for a conference according to the present disclosure; and
Fig. 6 is a schematic structural diagram of a releasing device for a conference according to an embodiment of the present disclosure.

### DETAILED DESCRIPTION

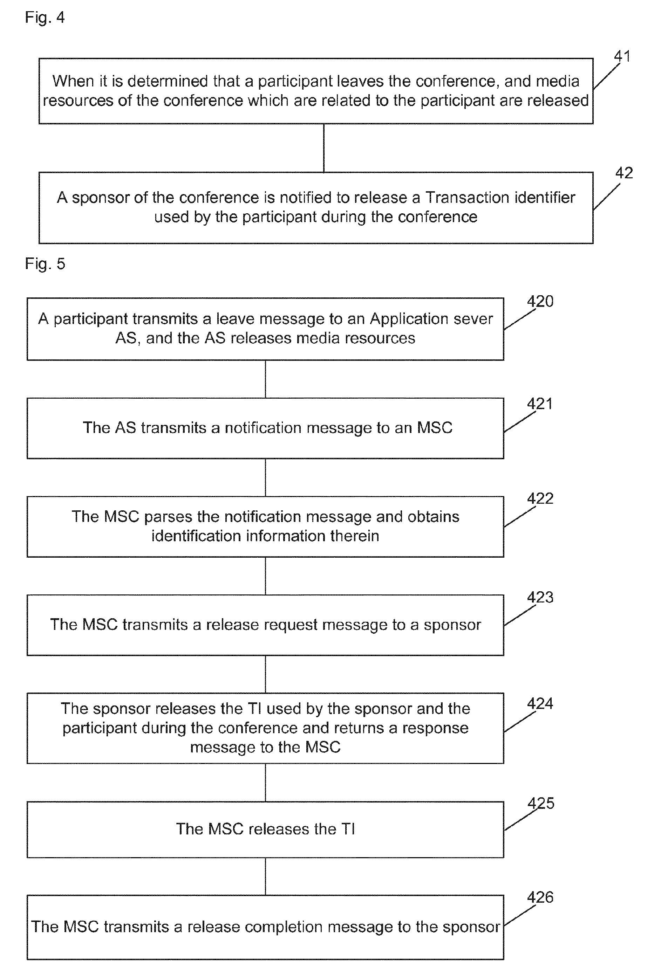

An embodiment of the present disclosure provides a releasing method for a conference, as shown in Fig. 4, the method includes:
Step 41, when it is determined that a participant leaves the conference, media resources of the conference which are related to the participant are released.

Preferably, step 41 may be:
when the participant of the conference is intended to leave the conference, the participant transmits a leave message BYE to an AS on a network side; upon receiving the leave message, the AS determines that the participant is intended to leave, then releases a dialogue and media resources between the sponsor and the participant during the conference.

Here the media resources include playing media and a conference link used during the conference between the sponsor and the participant.

Step 42, a sponsor of the conference is notified to release a Transaction Identifier (TI) used by the participant during the conference.

Preferably, after the TI used by the participant during the conference on the network side is released, the sponsor of the conference is notified to release the TI used by the participant during the conference; or, after the sponsor of the conference releases the transaction identifier used by the participant during the conference, the transaction identifier used by the participant during the conference on the network side is released.

Here the network side includes network elements such as an MSC server (called MSC for short), an AS, an S-CSCF and an MRFC/MRFP; wherein the MRFC/MRFP includes a conference link.

Here in step 41, after releasing the dialogue and media resources between the sponsor and the participant during the conference, the AS transmits a notification message NOTIFY to the S-CSCF which forwards the notification message NOTIFY to the MSC.

Or, the AS directly transmits the notification message NOTIFY to the MSC.

After receiving the notification message NOTIFY, the MSC releases the transaction identifier TI, and transmits a release request message to the sponsor so as to notify the sponsor to release the transaction identifier TI, and waits to receive an acknowledgement response message returned by the sponsor.

Or, after receiving the notification message NOTFY, the MSC transmits a release request message to the sponsor of the conference, and after receiving an acknowledgement response message from the sponsor, the MSC releases the transaction identifier used by the participant during the conference.

Specifically, after receiving the release request message, the sponsor releases a transaction identifier TI used by the sponsor and the participant during the conference, and returns, to the MSC, an acknowledgement response message indicating that the transaction identifier TI has been released.

After receiving the acknowledgement response message, the MSC then transmits a release completion message to the sponsor, until then, the three-way handshake between the MSC and the sponsor is completed, thereby ensuring release of the transaction identifier TI by both the network side and the terminal side.

Here both the notification message and the release request message contain identification information of the participant; typically, the participant may be a mobile terminal, a fixed terminal, an Internet Personal Access Device (IPAD); accordingly, the identification information includes a number and a Subscriber Identity Module (SIM) serial number of the mobile terminal, and a number of the fixed terminal, an IP address.

Fig. 5 is a schematic diagram of a specific embodiment of the releasing method for a conference provided by the present disclosure, with reference to which the releasing method for a conference according to the present disclosure will be further described.

For example, a participant UE2 is intended to leave a three-party conference involving the participant UE2, a sponsor UE1 and another participant UE3.
Step 420, the participant UE2 transmits BYE to an AS, and when receiving the BYE, the AS determines that the participant UE2 is intended to leave the conference, the AS releases the conference and the occupied conference link between UE1 and UE2.
Step 421, the AS transmits, to an S-CSCF, a notification message NOTIFY indicating leave of the participant UE2, and the S-CSCF forwards the notification message NOTIFY to the MSC.

Or, the AS may also directly transmit the notification message NOTIFY to the MSC.

Step 422, after receiving the notification message, the MSC parses the notification message and obtains identification information of the participant therein.

Here the MSC receives and parses the notification message NOTIFY containing the identifier of the participant UE2, such as the SIM serial number of UE2.

Step 423, the MSC transmits, to the sponsor, a release request message Disconnect containing the identification information of the participant.

Or step 423', after releasing the transaction identifier used by the sponsor and the participant during the conference, the MSC then transmits the release request message Disconnect to the sponsor.

Here the MSC transmits, to the sponsor UE1, a release request message Disconnect containing the SIM serial number identifier of UE2; or the MSC first releases a transaction identifier TI used by UE1 having the conference with UE2 having the SIM serial number identifier, and then transmits the release request message Disconnect to the sponsor UE1.

Step 424, after receiving the release request message, the sponsor releases a transaction identifier TI used by the sponsor and the participant during the conference, and returns, to the MSC, an acknowledgement response message, indicating completed release of the transaction identifier TI, to the release request message.

Here after receiving the release request message, UE1 obtains the SIM serial number of UE2 by a parsing operation, and releases the transaction identifier TI1 used by UE1 having the conference with UE2, and then returns an acknowledgement response message to the MSC.

Step 425, after receiving the acknowledgement response message, the MSC releases the transaction identifier TI used by the sponsor and the participant during the conference, and the process proceeds to step 426.

Or step 425', after the MSC receives the acknowledgement response message, the process proceeds to step 426.

Here after receiving the response message returned by UE1, the MSC releases the transaction identifier TI1 used by UE1 having the conference with UE2, or proceeds to implement step 426.

Step 426, the MSC transmits, to the sponsor, a release completion message, so as to ensure that both the network side and the terminal side release the transaction identifier TI.

The above step 423 (423'), step 424 and step 426 are a three-way handshake process between the MSC and UE1 in the embodiment of the present disclosure. Specifically, step 426 is an optimized technical scheme, in which the MSC transmits the release completion message to the sponsor UE1 so as to ensure that both the network side and the terminal side release the transaction identifier TI, The step 426 may also not be implemented.

An embodiment of the present disclosure further provides a computer storage medium, in which a computer-executable instruction is stored, wherein the computer-executable instruction is configured to implement the aforementioned releasing method for a conference.

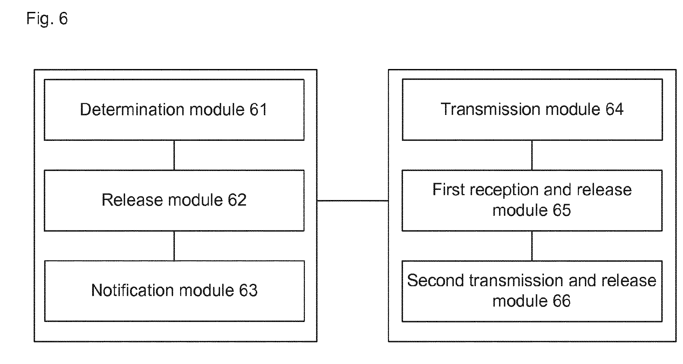

Based on the above releasing method for a conference, an embodiment of the present disclosure further provides a releasing device for a conference, as shown in Fig. 6, the device includes a determination module 61, a release module 62 and a notification module 63, in which:
the determination module 61, located in an AS, is configured to determine that a participant leaves the conference;
the release module 62, located in the AS, is configured to release media resources of the conference which are related to the participant; and
the notification module 63, located in the MSC, is configured to notify a sponsor of the conference to release a transaction identifier TI used by the participant during the conference.

Here the media resources include playing media and a conference link used during the conference between the sponsor and the participant.

Preferably, the device further includes a transmission module 64, a first transmission and release module 65, a second transmission and release module 66, wherein the transmission module 64 is located in the AS, the first transmission and release module 65 is located in the MSC, and the second transmission and release module 66 is located in a terminal serving as a sponsor.

The transmission module 64 receives a leave message BYE transmitted by the participant, and triggers the determination module 61, and after the determination module 61 determines that the participant leaves the conference, the release module 62 releases related media resources of the participant during the conference; then, the transmission module 64 transmits a notification message to the MSC which specifically is the first transmission and release module 65; the first transmission and release module 65, after receiving the release request message and releasing the transaction identifier TI used by the sponsor and the participant during the conference during the conference, triggers the notification module 63; and after being triggered, the notification module 63 transmits a release request message to the sponsor which specifically is the second transmission and release module 66; after receiving the release request message, the second transmission and release module 66 releases the transaction identifier used by the sponsor and the participant during the conference during the conference, and returns an acknowledgement response message to the MSC which is specifically the first transmission and release module 65; after receiving the acknowledgement response message, the first transmission and release module 65 transmits a release completion message about the transaction identifier TI to the sponsor which is specifically the second transmission and release module 66, so as to ensure that both the terminal side and the network side release the transaction identifier TI.

Here after receiving the acknowledgement response message, the MSC which specifically is the first transmission and release module 65, may also not transmit the release completion message to the sponsor which is specifically the second transmission and release module 66.

Specifically, after receiving the release request message, the MSC which is specifically the first transmission and release module 65 first triggers the notification module 63 to transmit the release request message to the sponsor which specifically is the second transmission and release module 66, and after receiving an acknowledgement response message of the release request message which is returned by the sponsor which is specifically the second transmission and release module 66, the MSC which is specifically the first transmission and release module 65 then releases the transaction identifier TI used by the sponsor and the participant during the conference.

Here both the notification message and the release request message contain identification information of the participant; typically, the participant may be a mobile terminal, a fixed terminal, or an IPAD; accordingly, the identification information includes a number and a SIM serial number of the mobile terminal, and a number of the fixed terminal, an IP address.

In practical applications, the determination module 61, the release module 62 and the transmission module 64 may all be implemented by a Central Processing Unit (CPU), a Digital Signal Processor (DSP), a Micro Processor Unit (MPU) or a Field Programmable Gate Array (FPGA); the CPU, DSP, MPU and FPGA may all be arranged in an AS.

The first transmission and release module 65 may be implemented by a CPU, a DSP, an MPU or an FPGA, and the CPU, DSP, MPU and FPGA may all be arranged in an MSC.

The second transmission and release module 66 may be implemented by a CPU, a DSP, an MPU or an FPGA, and the CPU, DSP, MPU and FPGA may all be arranged in a terminal.

An embodiment of the present disclosure further provides a releasing system for a conference, including an Application Server (AS) and a Mobile Switching Center (MSC), in which:
the AS is configured to, after determining that a participant leaves the conference, release media resources of the conference which are related to the participant, and transmit a notification message for releasing a transaction identifier to the MSC;
the MSC is configured to, after receiving the notification message, release the transaction identifier used by the participant during the conference, transmit a release request message to the sponsor of the conference, and receive an acknowledgement response message from the sponsor; or the MSC is configured to, after receiving the notification message, transmit a release request message to the sponsor of the conference, and after receiving an acknowledgement response message from the sponsor, release the transaction identifier used by the participant during the conference.

The system may further include a terminal serving as the sponsor; modules included in the terminal, AS and MSC and the functions implemented by the modules are the same as those modules and the functions thereof as shown in Fig. 6.

It should be appreciated by those skilled in the art that functions implemented by the processing modules of the releasing device for a conference shown in Fig. 6 may be understood with reference to the above related description of the releasing method for a conference. It should be appreciated by those skilled in the art that functions of respective processing modules of the releasing device for a conference shown in Fig. 6 may be implemented by programs running on a processor or by specific logic circuits.

It should be appreciated by those skilled in the art that embodiments of the present disclosure may be provided as a method, system or computer program product. Therefore, the present disclosure may be in the form of a hardware embodiment, a software embodiment or an embodiment combining both hardware and software. In addition, the present disclosure may be in the form of a computer program product implemented on one or more computer usable storage media (including but not limited to a magnetic disk storage and an optical storage) containing computer-executable program codes.

The present disclosure is described with reference to flow charts and/or block diagrams of the method, device (system) and computer program product according to embodiments of the present disclosure. It should be appreciated that computer program instructions may be used to implement each process and/or block in flow charts and/or block diagrams and to implement the combination of processes and/or blocks in the flow charts and/or the block diagrams. Such computer program instructions may be provided to a processor of a general-purpose computer, a special-purpose computer, an embedded processor or other programmable data processing device so as to form a machine so that an instruction implemented by the processor of the computer or other programmable data processing device generates a device for implementing a function specified in one or more processes of a flow chart and/or one or more blocks of a block diagram.

Such computer program instructions may also be stored in a computer readable storage capable of directing a computer or other programmable data processing devices to operate in a specific way so that an instruction stored in the computer readable storage generates a manufacture including an instructing device which can implement a function specified in one or more processes of a flow chart and/or one or more blocks of a block diagram.

Such computer program instructions may also be loaded onto a computer or other programmable data processing device so that a series of operation steps are implemented on the computer or other programmable data processing device to generate a computer-implemented processing and therefore an instruction implemented on the computer or other programmable devices provides a step for implementing a function specified in one or more processes of a flow chart and/or one or more blocks of a block diagram.

What described are merely preferable embodiments of the present disclosure, and are not intended to limit the present disclosure.

### INDUSTRIAL APPLICABILITY

The releasing method, device and system for a conference, and a storage medium, provided by the embodiments of the present disclosure, include that: when it is determined that a participant leaves the conference, media resources of the conference which are related to the participant are released, and a sponsor of the conference is notified to release a transaction identifier used by the participant during the conference. By means of the technical solutions of the embodiments of the present disclosure, a sponsor of a conference can learn in time from a release request message that a participant leaves the conference, and the sponsor and the MSC server release, through a three-way handshake, the transaction identifier used by the sponsor and the participant during the conference, so as to provide transaction identifier resources to other subsequent participants accessing the conference, thereby improving resource utilization.

## Claims

1. A releasing method for a conference, comprising:
when determining that a participant leaves the conference, releasing media resources of the conference which are related to the participant, and notifying a sponsor of the conference to release a transaction identifier used by the participant during the conference.

2. The releasing method for a conference according to claim 1, further comprising:
before notifying the sponsor of the conference to release the transaction identifier used by the participant during the conference, releasing the transaction identifier used by the participant during the conference on a network side.

3. The releasing method for a conference according to claim 1, further comprising:
after the sponsor of the conference releases the transaction identifier used by the participant during the conference, releasing the transaction identifier used by the participant during the conference on a network side.

4. The releasing method for a conference according to claim 3, wherein the determining that a participant leaves the conference comprises:
determining, by an Application Server (AS) on the network side, that the participant leaves the conference after receiving a leave message transmitted by the participant.

5. The releasing method for a conference according to claim 4, further comprising:
after determining by the AS that the participant leaves the conference,
transmitting, by the AS, a notification message for releasing the transaction identifier to a Mobile Switching Center (MSC), or transmitting, by the AS through a Serving Call Session Control Function (S-CSCF) on the network side, a notification message for releasing the transaction identifier to an MSC;
after the MSC receives the notification message, releasing, by the MSC, the transaction identifier used by the participant during the conference, transmitting a release request message to the sponsor of the conference, and receiving an acknowledgement response message from the sponsor; or
after the MSC receives the notification message, transmitting, by the MSC, a release request message to the sponsor of the conference, and after receiving an acknowledgement response message from the sponsor, releasing the transaction identifier used by the participant during the conference.

6. The releasing method for a conference according to claim 5, further comprising:
after the sponsor receives the release request message, releasing, by the sponsor, the transaction identifier used by the sponsor and the participant during the conference, and returning the acknowledgement response message to the MSC.

7. A releasing device for a conference, comprising a determination module, a release module and a notification module;
wherein the determination module is configured to determine that a participant leaves the conference;
the release module is configured to release media resources of the conference which are related to the participant; and
the notification module is configured to notify a sponsor of the conference to release a transaction identifier used by the participant during the conference.

8. The releasing device for a conference according to claim 7, further comprising a transmission module configured to receive a leave message transmitted by the participant and trigger the determination module;
accordingly, the determination module is configured to determine that the participant leaves the conference.

9. The releasing device for a conference according to claim 8, further comprising a first transmission and release module and a second transmission and release module;
wherein the transmission module is further configured to transmit a notification message;
accordingly, the first transmission and release module is configured to receive the notification message, release the transaction identifier used by the participant during the conference on a network side, and trigger the notification module;
the notification module is configured to transmit a release request message; and
the second transmission and release module is configured to receive the release request message, release the transaction identifier used by the sponsor and the participant during the conference, and return an acknowledgement response message to the first transmission and release module.

10. A releasing system for a conference, comprising an Application Server (AS) and a Mobile Switching Center (MSC);
wherein the AS is configured to, after determining that a participant leaves the conference, release media resources of the conference which are related to the participant, and transmit a notification message for releasing a transaction identifier to the MSC;
the MSC is configured to, after receiving the notification message, release the transaction identifier used by the participant during the conference, transmit a release request message to a sponsor of the conference, and receive an acknowledgement response message from the sponsor; or
the MSC is configured to, after receiving the notification message, transmit a release request message to a sponsor of the conference, and after receiving an acknowledgement response message from the sponsor, release the transaction identifier used by the participant during the conference.

11. A computer storage medium, in which a computer-executable instruction is stored, wherein the computer-executable instruction is configured to implement the releasing method for a conference according to any one of claims 1 to 6.
